# EUROPEAN PATENT APPLICATION

(11) **EP 4 763 498 A1**
(43) Date of publication of application: **24.06.2026**
(21) Application number: 24221769.3
(22) Date of filing: 19.12.2024
(51) Int. Cl.: B29D 30/06, B29C 35/04

(54) **HEATING ARRANGEMENT FOR CURING A GREEN TIRE**

(71) Applicant: Bridgestone Europe NV/SA, 1930 Zaventem (BE)
(72) Inventor: Ivonini, Marco, 00128 Roma, Via del Fosso del Salceto 13-15 (IT); Rypak, Martin, 00128 Roma, via del Fosso del Salceto 13-15 (IT); Santarelli, Giulio, 00128 Roma (IT); Scala, Pierpaolo, 00128 Roma (IT)
(74) Representative: Marchetti, Alessio

(57) **Abstract**

A heating arrangement for curing a tire, the heating arrangement comprising a cone ring comprising a heat transfer region comprising one or more heat exchange elements, the heat exchange elements having one or more protrusion elements for increasing the surface area of the heat exchange elements.

## Description

### TECHNICAL FIELD

The present invention relates to a heating arrangement for curing a green tire and a curing device comprising the heating arrangement. Further, the invention relates to a method for curing a green tire and a computer-readable storage medium storing program code, the program code comprising instructions for carrying out such a method.

### BACKGROUND

The manufacturing of tires is a multi-step process that involves various stages of preparation and assembly to produce a fully functional and durable tire. One critical step in this process is the curing of a "green tire", which refers to the tire in its uncured state, after all the components (such as rubber, steel belts, fabric plies, and treads) have been assembled but before the tire has been vulcanized.

Curing is the process in which a green tire undergoes vulcanization, a chemical process where the rubber material is heated and preferably cross-linked with sulfur to improve the tire's strength, elasticity, and overall durability. During curing, the green tire is placed into a heated mold that applies pressure and high temperature to the tire. This process not only vulcanizes the rubber but also imprints the tread patterns and sidewall markings onto the tire, forming its final shape and properties. Proper curing is essential to achieving the desired performance characteristics, such as wear resistance, traction, and heat tolerance, which are critical for the tire's safe and reliable operation on vehicles.

Curing generally takes place in a pressurized environment inside a curing device, where the heat is carefully controlled to ensure consistent vulcanization. Maintaining a consistent high temperature in the curing device is essential for ensuring that each green tire receives uniform heat exposure, which in turn ensures proper vulcanization. Once the curing cycle is completed, the tire is considered fully cured and is ready for further processing, inspection, and eventual use.

In a typical tire manufacturing process, after a cured tire is removed from the curing device, a new green tire is placed into the curing device. However, the process of removing and replacing the cured tire can take up to several minutes. During this time, the device assembly cools down. Reheating the assembly up to the previous temperature after the tire replacement requires a substantial amount of energy.

The goal of the present invention is to address this issue by providing a solution that improves the robustness and maintains a high quality of the process of changing a cured tire with a new green tire with a low energy consumption. Specifically, the invention seeks to prevent the press from cooling during tire replacement or, at least ensure rapid energy efficient re-heating to the required curing temperature.

### SUMMARY OF THE INVENTION

The objective of the present invention is to provide a heating arrangement for curing a tire, the heating arrangement comprising a cone ring, the cone ring comprising a heat transfer region, the heat transfer region comprising one or more heat exchange elements having one or more protrusion elements for increasing the surface area of the heat exchange elements. The objective is also to provide a curing device for manufacturing a tire comprising means for receiving a green tire; and the heating arrangement, which overcome one or more of the above-mentioned problems of the prior art. It is further an objective of the present invention to provide a method for heating the curing device.

A first aspect of the invention provides a heating arrangement for curing a tire, the heating arrangement comprising a cone ring comprising a heat transfer region comprising one or more heat exchange elements having one or more protrusion elements for increasing the surface area of the heat exchange elements.

The heating arrangement of the first aspect improves the heat distribution in the cone ring of the heating arrangement, thereby improving the curing of a green tire.

In a first implementation of the heating arrangement according to the first aspect, the one or more protrusion elements are heat transfer fins.

In a further implementation of the heating arrangement according to the first aspect, the heat transfer region comprises a plurality of microgrooves configured to increase the surface area of the heat transfer region, preferably, the heat transfer region and/or the heat exchange elements and/or the one or more protrusion elements comprise the microgrooves.

The provision of such microgrooves further improves the heat provision by means of the heating arrangement.

In a further implementation of the heating arrangement according to the first aspect, the heat transfer region comprises at least two heat exchange elements.

Providing multiple heat exchange elements allows to maximize the volume occupied by heat exchange elements, thereby improving the heat exchange/provision properties of the heating arrangement.

In a further implementation of the heating arrangement according to the first aspect, a distance from the one or more protrusions for increasing the surface area to the inner side of the cone ring is substantially constant.

By providing the protrusions at a substantially constant distance to the inner side of the cone ring allows to provide heat with a low temperature gradient over a large portion of the surface of the heating arrangement.

In a further implementation of the heating arrangement according to the first aspect, the one or more heat exchange elements have a copper material surface layer, preferably, the protrusions comprise a copper material surface layer.

The copper material surface layer increases the thermal conductance of the heat exchange elements.

In a further implementation of the heating arrangement according to the first aspect, the one or more heat exchange elements have a substantially right-trapezoid shape.

In a further implementation of the heating arrangement according to the first aspect, the heat transfer region is configured to direct a flow of steam through the heat transfer region, preferably along the heat exchange elements.

In a further implementation of the heating arrangement according to the first aspect, the heating arrangement further comprises a heating plate, the heating plate preferably being arranged substantially perpendicular to the cone ring, and comprising a channel structure for receiving steam. Preferably, the heating arrangement comprises two heating plates arranged parallel to each other and substantially perpendicular to the cone ring, wherein the two heating plates and the cone ring form a substantially hollow cylindrical shape.

Providing this heating plate allows heating of the green tire from multiple sides/angles, further providing a more equal and larger amount of heat to the green tire.

A second aspect of the invention provides a curing device for manufacturing a tire comprising means for receiving a green tire and the heating arrangement according to any one of the preceding claims, wherein the cone is arranged around the means for receiving the green tire.

The above curing device has an improved heat provision to the green tire, improving the quality and properties of the cured tire.

In a further implementation of the device of the second aspect, the cone ring is configured to provide heat to the means for receiving the green tire.

In a further implementation, the cone ring and/or an engagement portion of the means for receiving the green tire have a substantially right-trapezoid shape cross section.

The above allows for an improved mechanical connection between the cone ring and the engagement portion, improving the heat transfer properties of the arrangement.

In a further implementation of the device of the second aspect as such or according to the first implementation of the second aspect, the device further comprises means for determining a state of the curing device, configured to determine that the means for receiving the green tire is in an open position configured to allow insertion of the green tire or removal of the cured tire from the means for receiving the green tire or in a closed position that does not allow insertion or removal of the green tire from the means for receiving the green tire.

In a further implementation of the device of the second aspect as such or according to the first implementation of the second aspect, the device further comprises, means for determining the temperature of at least a portion of the means for receiving the green tire, and/or of at least a portion of the cone ring.

In a further implementation of the device of the second aspect, one or more heating plates are arranged above and/or below the means for receiving the green tire, such that the heating arrangement encapsulates the means for receiving the green tire.

A third aspect of the invention relates to a method for curing a green tire using the curing device according to the second aspect of the invention. The method comprising the steps of determining that a means for receiving a green tire is in an open position configured to allow insertion or removal of a green tire from the means for receiving the green tire and/or determining that the curing device requires additional heating. If it is determined that the means for receiving the green tire is in the closed position and/or no additional heating is required, providing a first amount of steam to a heat transfer region of the cone ring, if it is determined that the means for receiving the green tire is in the open position and/or that additional heating is required, providing a second amount of steam to the heat transfer region of the cone ring, the second amount of steam being substantially larger than the first amount of steam.

In a further implementation of the device of the third aspect, the second amount of steam is provided as a steam pulse.

In a further implementation of the device of the third aspect, the second amount of steam is at least 10%, preferably at least 15%, more preferably at least 20%, most preferably at least 25% larger than the first amount of steam.

In a further implementation of the device of the third aspect, the method further comprises if it is determined that the means for receiving the green tire is in the closed position, providing a third amount of steam to a channel structure of a heating plate, and if it is determined that the means for receiving the green tire is in the open position, providing a fourth amount of steam to the channel structure of the heating plate, the fourth amount of steam being substantially larger than the third amount of steam.

In a further implementation of the device of the third aspect, the fourth amount of steam is at least 2%, preferably at least 3%, more preferably at least 4% and most preferably at least 5% larger than the third amount of steam.

In a further implementation of the device of the third aspect, the second amount of steam is provided for a predetermined duration.

In a further implementation of the device of the third aspect, the second amount of steam is provided for as long as it is determined that the means for receiving a green tire is in the open position.

A further aspect of the invention refers to a computer-readable storage medium storing program code, the program code comprising instructions that when executed by a processor carry out the method of the second aspect or one of the implementations of the second aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: shows a vertical cross-sectional view of a heating arrangement in accordance with an embodiment of the present invention,
- FIG. 2: shows a schematic view of a surface of an exemplary heat transfer region comprising microgrooves in accordance with aspects of the present invention,
- FIG. 3: shows a vertical cross-sectional view of a cone ring in accordance with an embodiment of the present invention,
- FIG. 4: shows a thermal simulation of heat exchange elements in accordance with an embodiment of the present invention,
- FIG. 5: shows a vertical cross-sectional view of a heating arrangement in accordance with an embodiment of the present invention,
- FIG. 6: shows a vertical cross-sectional view of a curing device in accordance with an embodiment of the present invention,
- FIG. 7: is a block diagram illustrating a method in accordance with a further embodiment of the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

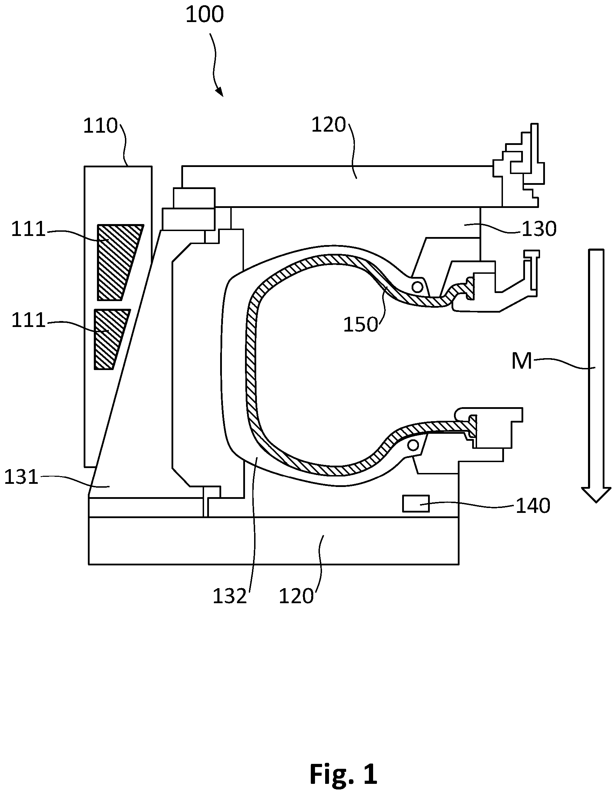

Fig. 1 shows an exemplary heating arrangement 100 according to the present invention. A cone ring 110 is positioned adjacent a means for receiving a green tire 130. The means for receiving the green tire 130 may comprise a cavity configured to receive and cure a green tire 132. The means for receiving the green tire 130 may also be configured to function as a tire mold/tire press configured to provide a structure/profile to the cured tire.

In this example, the cone ring 110 is ring shaped and arranged around the means for receiving the green tire 130. The cone ring 110 has a larger radius than the means for receiving the green tire 130, such that the cone ring 110 surrounds and encloses the means for receiving the green tire 130. Preferably, the cone ring 110 is in contact with the means for receiving the green tire 130 for optimized heat exchange between the cone ring 110 and the means for receiving the green tire 130. In some examples, the means for receiving the green tire 130 comprises an engagement portion 131 configured to engage with the heat cone ring 110. This engagement portion 131 may be integrally formed as part of the means for receiving the green tire 130, or be provided as an additional part configured to engage with the cone ring 110 and with the means for receiving the green tire 130, such that the cone ring 110 and the means for receiving the green tire 130 form a strong mechanical connection. The cone ring 110 may connect mechanically to the engagement portion 131 with a bottom side, i.e., a side in direction M and/or with an inner side 115, i.e., a side directed towards the engagement portion 131.

The cone ring comprises one or more heat transfer regions 111. The one or more heat transfer regions 111 comprise one or more cavities configured to function as heating agent carrying means. The heat transfer region will be described by example of a steam chamber for receiving and guiding a flow of steam. However, the heat transfer region 111 may be configured to guide any other liquid or gaseous heating agent.

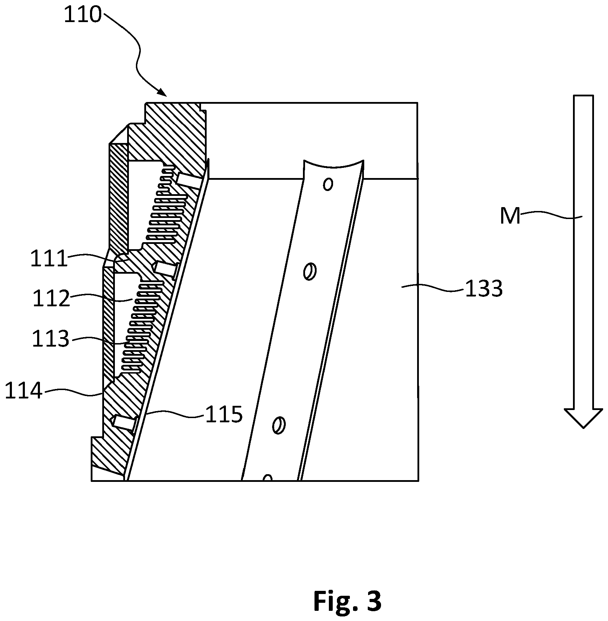

The one or more heat transfer regions 111 comprise one or more heat exchange elements 112 having one or more protrusion elements 113 (shown in Fig. 3) for increasing the surface area of the one or more heat exchange elements 112. In the specific example shown in Fig. 3, one heat transfer region 111 is provided comprising two heat exchange elements. The one or more heat exchange elements 112 are configured to heat up through heat (in the form of e.g., steam) provided to the heat exchange elements 112, thereby providing heat to the cone ring in the proximity of the heat transfer regions 111 and of the heat exchange elements 112 in particular. Providing protrusion elements 113 increases the surface area of the one or more heat exchange elements 112 increasing the speed at which the heat exchange elements 112 heat up. In the example shown in Fig. 3, the heat exchange elements 112 are provided in the heat transfer regions 111 at an outer side 114 of the cone ring 110 opposite to the means for receiving the green tire 130. In this arrangement, the protrusion elements 113 protrude away from the means for receiving the tire 130. In other examples, the heat exchange elements 112 may be provided at a different position inside the cone ring 110. In such examples, the protrusion elements 113 may protrude in a different direction. For example, the heat exchange elements may be provided at a side adjacent to the means for reeving the green tire. In such arrangement, the protrusion elements 113 may extend towards the side opposite to the means for receiving the green tire 130. By providing a larger amount of steam inside the steam chambers, the one or more heat exchange elements 112 can further heat up to a higher temperature and/or more rapidly. An amount of steam relates to any of an amount of pressure of steam, an amount of thermal energy provided by the steam, an amount of flow rate of steam. Preferably, the one or more heat exchange elements 112 are made of a material having a high thermal conductivity, preferably a metal material. Preferably, the shape of the heat transfer region is substantially similar to the outer shape of the cone ring 110. Preferably, the one or more heat exchange elements 112 have a substantially right-trapezoid cross section/shape. In examples where the one or more heat exchange elements 112 have a substantially right-trapezoid cross section/shape, preferably, the angled side is arranged inside the inner volume of a cavity of the one or more heat transfer regions 111, while the side of the heat exchange elements 112 corresponding to a square opposite to the angled side is connected to a side surface of the cavity of the heat transfer region 111. Preferably, the one or more protrusion elements 113 are heat transfer fins. Heat transfer fins are commonly used in the art as heating and cooling elements and are configured to provide excellent heat exchange properties.

To further increase the heat transfer properties of the heat transfer region 111 and/or the heat exchange elements 112, the surface of the heat transfer region 111 and/or the heat exchange elements 112 may comprise microgrooves configured to increase the surface of the respective elements. Additionally, or alternatively, the heat transfer region 111 and/or the heat exchange elements 112 may have a copper surface coating.

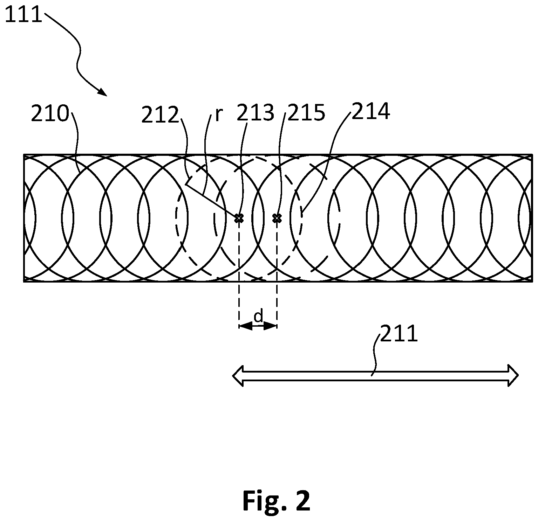

Fig. 2 illustrates a schematic view of an interior surface of an exemplary heat transfer region 111 comprising microgrooves 210 in accordance with aspects of the present invention.

According to Fig. 2, the heat transfer region 111 may comprise a plurality of microgrooves 210. In Fig. 2, the microgrooves 210 are shown as circular-shaped microgrooves, however, other shapes are also possible, as for example straight lines, which are perpendicular to a longitudinal direction 211 of the heat transfer region 111, wavy shapes, or entirely different shapes.

The microgrooves may have a depth of at least 0.2 mm and at most 0.5 mm, preferably at least 0.25 mm and at most 0.45 mm, more preferably at least 0.3 mm and at most 0.4 mm.

Microgrooves can be formed in a finished workpiece (e.g. in a finished channel or channel surface surface), by use of a milling machine, a drill, a CNC machine, a saw, or any other apparatus for locally removing material from a workpiece. An exemplary method for making circular shaped grooves, as displayed in Fig. 2, is described elsewhere herein.

As is shown in Fig. 2, the microgrooves may comprise a plurality of circular-shaped microgrooves, succeeding one another along the longitudinal direction 211 of the heat transfer region 111. In alternative examples, the plurality of circular-shaped microgrooves may succeed one another along a transversal direction of the heat transfer region 111 perpendicular to the longitudinal direction 211. In further alternative examples, the plurality of circular-shaped microgrooves may succeed one another along a diagonal direction relative to the longitudinal direction 211 of the heat transfer region 111. The longitudinal direction of the heat transfer region 111 is the direction circulating around the cone ring 110.

For illustrating the connection between consecutive circular-shaped microgrooves, a first circular-shaped microgroove 212 and a second circular-shaped microgroove 214 are highlighted in Fig. 2. However, it is to be understood that the relations explained with respect to the first circular-shaped microgroove 212 and the second circular-shaped microgroove 214 may apply to multiple or all consecutive circular-shaped microgrooves.

As is shown in Fig. 2, each circular-shaped microgroove may be defined by a center and a radius. For example, the first circular-shaped microgroove 212 may be defined by center 213 and the radius r. Similarly, the second circular-shaped microgroove 214 may be defined by center 215. For purposes of lucidity, the radius r is not indicated for the second circular-shaped microgroove 214 in Fig. 2. However, the radius of the second circular-shaped microgroove 214 may correspond to radius r of the first circular-shaped microgroove 212.

As is shown in Fig. 2, the center of each circular-shaped microgrooves may be shifted with respect to the center of a consecutive circular-shaped microgroove by a shifting length smaller than its radius, preferably smaller than half its radius.

Hence, the center 215 of the second circular-shaped microgroove 214 may be shifted with respect to the center 213 of the first circular-shaped microgroove 212 along the longitudinal direction 211 of heat transfer region 111 by a shifting length d. The shifting length d may correspond to the radius r as d < r, preferably d < r/2.

As is shown in Fig. 2, each circular-shaped microgroove may be intersected by at least one consecutive circular-shaped microgroove. Preferably, each circular-shaped microgroove may be intersected by multiple consecutive circular-shaped microgrooves. As shown in Fig. 2, for example, each circular-shaped microgroove may be intersected by three consecutive circular-shaped microgrooves. The number of consecutive circular-shaped microgrooves intersecting each circular-shaped microgroove depends on the ratio between the shifting length d and the radius r: A smaller shifting length d at constant radius r may lead to intersection points with more consecutive grooves. Such intersection points may be particularly advantageous, because at these points the surface area of the channel surface is especially increased, leading to improved heat transfer from the heating agent and the heating plate. Thus, a relatively small shifting length d may be particularly advantageous.

The radius r of each circular-shaped microgroove 210 may correspond to at most half the channel width, preferably to half the channel width.

Hence, a more efficient heat transfer from the heating agent to the means for receiving the green tire 130 can be achieved.

Additionally, the microgrooves can create small turbulences in a stream of the heating agent (e.g., steam) through the channel. These turbulences further improve the heat transfer, as the stream is no longer laminar, such that particles of the heating agent (e.g., steam) can better interact with the elements of the heat transfer region 111 to transfer energy thereto in the form of heat.

Fig. 3 shows an exemplar heating arrangement 100 according to the present invention in more detail. Any of the aspect discussed with regards to Fig. 1 may apply to this example as well. In this example, the outer side 114 of the cone ring 110 facing in a direction opposite to the means for receiving the green tire 130 forms a substantially cylindrical shape. The inner side 115 of the cone ring is facing in a direction towards the means for receiving the green tire 130. At least a portion of the inner side 115 of the cone ring 110 is arranged with an angle relative to the outer side 114 of the cone ring 110. The arrangement of the outer side 144 forming a substantially cylindrical shape and the at least portion of the inner side 115 being arranged with an angle relative to the outer side 114 lead to the cone ring 110 having a right-trapezoidal cross-sectional shape.

Preferably, the at least portion of the inner side 115 of the cone ring 110 forms a cavity 133 corresponding to an outer shape of the means for receiving the green tire 130. In examples, where an engagement portion 131 is positioned between the means for receiving the green tire 130 and the cone ring 110, the at least portion of the inner side 115 of the cone ring 110 corresponds to the outer surface of the engagement portion 131. The shape of the cone ring 110 corresponding to the outer surface of the means for receiving the green tire 130 (or the engagement portion 131), and in particular the angle of the at least portion of the inner side 115 of the cone ring 110 provides for improved heat conductivity properties of the heating arrangement 100. That is, for the curing of a green tire, the cone ring 110 is moved onto the means for receiving the green tire 130 in the direction M, i.e., in the direction in which the thickness of the cone ring 110 decreases. Thereby, the at least portion of the inner side 115 of the cone ring 110 may engage snuggly with the means for receiving the green tire 130, improving the heat conductivity between the two.

In the example of Fig. 3, the heat transfer region comprises at least two heat exchange elements 112 having the substantially right-trapezoid cross section/shape. As stated with regards to Fig. 1, the at least two heat exchange elements 112 may alternatively be implemented as a single heat exchange element 112. By providing the cone ring 110 and the heat exchange elements 112 with a substantially right-trapezoidal cross section, the distance of the heat exchange elements 112 is substantially constant to the at least portion of the inner side 115 of the cone ring 110. Accordingly, the distance between the heat exchange elements 112 and the at least portion of the inner side 115 of the cone ring 110 is substantially constant. This allows to provide heat with an even distribution from the cone ring 110 to the means for receiving the green tire 130. This allows for an even heating of the green tire 130, reducing the risk of impurities of the curing and improves the quality of the final tire.

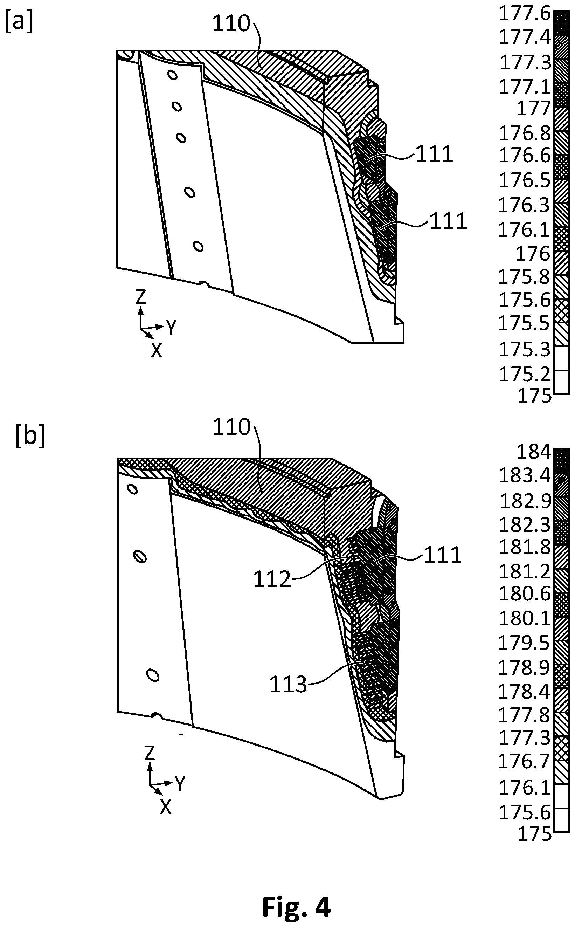

Fig. 4 shows thermal simulations of different arrangements of heat exchange elements 112 in a cone ring 110. In particular, the simulations compare the heat provided by a heat exchange element 112 without protrusion elements and a heat exchange element 112 with protrusion elements 113. In Figure [a], heat exchange elements 112 without protrusion elements are provided. In Figure [b], the heat exchange elements 112 are provided with one or more protrusion elements 113. As can be seen from the simulation results, in the embodiment with protrusion elements 113 higher absolute temperatures can be achieved (177°C for [a] vs. 184° for [b]). Moreover, the overall spread/distribution of heat over the entirety of the heat exchange elements 112 is larger in the embodiment with protrusion elements 113. Accordingly, providing the heat exchange elements 112 with protrusion elements 113 significantly increases heat distribution and maximum heat achieved with the heat exchange elements 112. As outlined before, these properties can be obtained due to the increased surface of the heat exchange elements 112 with the protrusion elements 113.

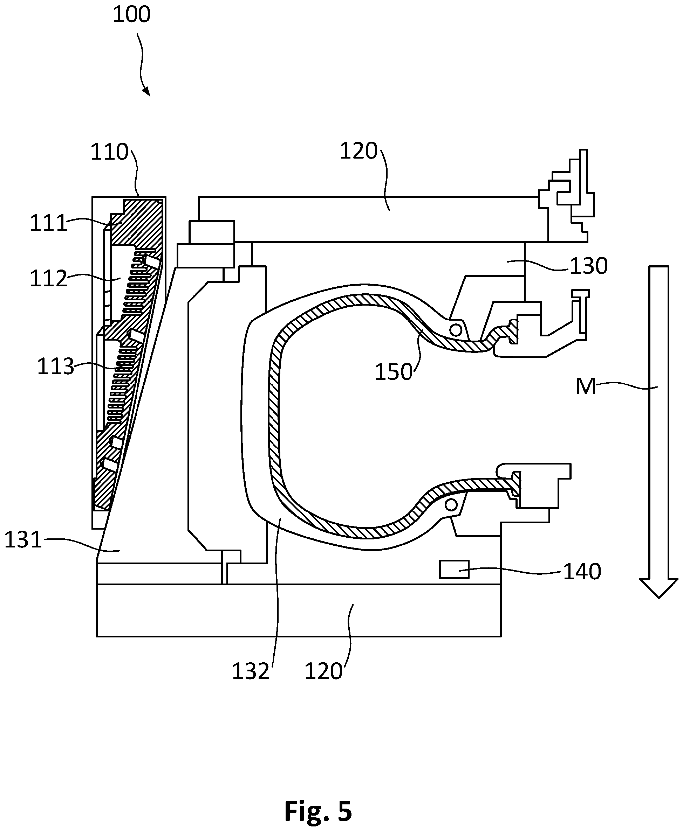

Fig. 5 shows an exemplary heating arrangement 100 according to an embodiment. Any aspects set forth with respect to previous embodiments and figures apply to Fig. 5, too.

In this example, the cone ring 110 is configured as set forth with respect to Fig. 3. This means that the heat transfer region 111 comprises at least two heat exchange elements 112 having a substantially right-trapezoid cross section/shape. As stated with regards to Fig. 3, the at least two heat exchange elements 112 may alternatively be implemented as a single heat exchange element 112. Alternative shapes are also possible. However, particularly the right trapezoidal shape has shown to provide the above benefits.

In the example shown in Fig. 5, the means for receiving the green tire 130 comprises an engagement portion 131. Here, the engagement portion 131 has substantially a ring shape, wherein the inner side of the engagement portion 131 forms a substantially ring shape corresponding to the outer shape of a tire and the outer side is arranged at an angle relative to the inner side. Accordingly, the engagement portion 131 has also a substantially right-trapezoidal shape. Accordingly, the outer side of the engagement portion 131 is configured to correspond to the inner side 115 of the cone ring 110, such that the cone ring 110 engages (substantially) snuggly with the engagement portion 131. This means, that by sliding the cone ring 110 onto the engagement portion 131 in the direction M, the thinnest portion of the cone ring 110 corresponds to the thickest portion of the engagement portion 131 and vice versa. This improves the heat transfer from heat provided by the cone ring 110 to the green tire engaged in the means for receiving the green tire 130.

In the example of Fig. 5, the heating arrangement 100 may further comprise one or more heating plates 120. The one or more heating plates 120 are preferably arranged substantially perpendicular to the cone ring 110. Accordingly, the one or more heating plates 120 extend in a direction perpendicular to the direction M. The one or more eating plates 120 are positioned above and/or below the means for receiving the green tire 132 in the direction M. The one or more heating plates 120 comprise a channel structure for receiving steam, preferably having a serpentine structure, wherein additionally or alternatively, an interior surface of the channel structure may comprise the plurality of microgrooves.

Moreover, the heating arrangement 100 and/or the means for receiving the green tire 130 may comprise means for determining a state of the means for receiving the green tire 140. The means for determining a state of the means for receiving the green tire 140 is configured to determine that the means for receiving the green tire 130 is in an open position configured to allow insertion or removal of the green tire from the means for receiving the green tire 130 or in a closed position that does not allow insertion or removal of the green tire from the means for receiving the green tire 130. Preferably, the means for receiving the green tire 130 is a sensor.

Additionally or alternatively, the means for receiving the green tire 130 and/or the cone ring 110 comprise means for determining the temperature of at least a portion of the means for receiving the green tire 130, and/or of at least a portion of the cone ring 110. Preferably, the means for determining the temperature is a temperature sensor.

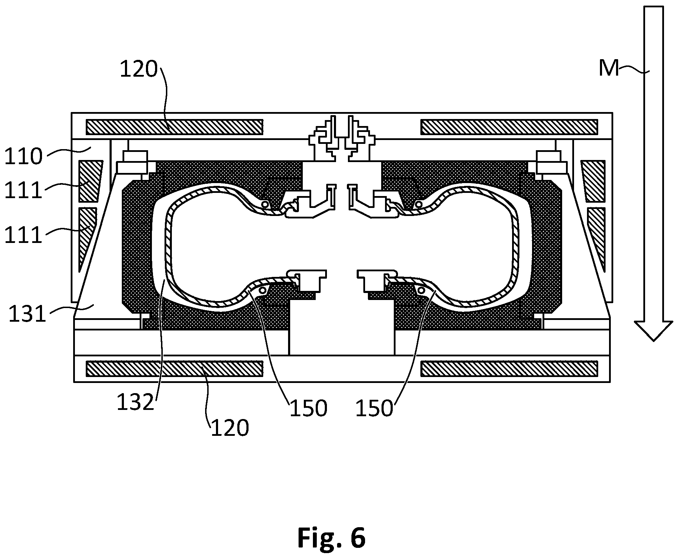

The present invention also relates to a curing device comprising the heating arrangement 100 described with respect to any of Figs. 1 to 5 and the corresponding means for receiving the green tire 130. One exemplary curing device is shown in Fig. 6. The curing device is configured to cure a green tire inserted into the means for receiving the green tire 130. In addition to the elements described with respect to Figs. 1 to 5, the curing device may further comprise a means for providing a heating agent 150 (preferably steam) inside a cavity for receiving the green tire in the means for receiving the green tire 130 configured to provide heating agent to the inside of the green tire. This way, heat is provided from the outside of the green tire (by means of the heating arrangement 100 of the cone ring and preferably by the one or more heating plates 120) and from the inside (through the means for providing a heating agent). The means for providing a heating agent (preferably steam) inside the cavity for receiving the green tire may be a heating bladder or may be implemented using a steam bladder.

The arrangement of Fig. 6 shows the curing device in the closed position, wherein the green tire 132 is inside the means for receiving the green tire 130. In this configuration, the curing device further comprises heating plates 120 above and below (with respect to the direction M) the means for receiving the green tire 130. The heating plates 120 and the cone ring 110 form the hollow cylindrical shape, wherein heat is provided from all four sides of the hollow cylinder. As illustrated in Fig. 6, the cone ring 110 and preferably also the heating plate 120 form a tight (snug) connection with the means for receiving the green tire 130, and preferably with the engagement portion 131. For removal of the cured (green) tire 132, the upper heating plate 120 (arranged on the side contrary to the direction M) and the cone ring 110 are removed from the means for receiving the green tire 130. The lower heating plate 120 may remain in contact with the means for receiving the green tire 130, preferably with the engagement portion 131. After insertion of a new green tire 132 into the means for receiving the green tire 130, the cone ring 110 and the upper heating plate 120 are slid back onto the means for receiving the green tire 130, preferably onto the engagement portion 131 and a new curing process may be initiated.

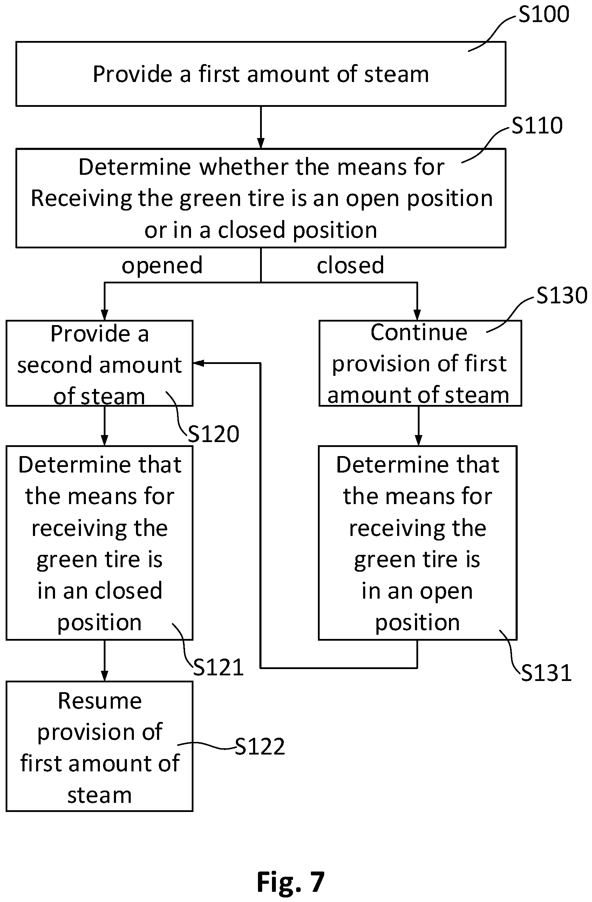

A method for curing a green tire according to the present invention will be described with reference to Fig. 7. In this example, the exemplary heating agent is steam.

However, the process steps may be performed in a similar manner for other heating agents.

In the default operation S100, a first amount of steam is provided to the heat transfer region of the cone ring 110. The first amount of steam corresponds to an amount of steam that will provide thermal energy sufficient to cure the tire during the curing process with a closed means for receiving the tire (a closed tire press/tire mold). Preferably, the first amount of steam is at least always provided in the heat transfer region of the cone ring 110 (default operation). Preferably, in the default operation a third flow of steam is provided to the one or more heating plates 120. Preferably, the first flow of steam and the third flow of steam are a substantially constant flow of steam. In the default operation a green tire may be inserted into the means for receiving the green tire 130 for curing.

In a subsequent step S110, the means for determining a state of the means for receiving the green tire 130 determines whether the means for receiving the green tire 130 is in an open position or in a closed position. Alternatively, in step S110, the means for determining the temperature may determine whether the means for receiving the green tire 130 is in an open position or in a closed position and/or whether additional heating is required. For example, a decrease in temperature may indicate that the means for receiving the green tire 130 is in an open position. Additionally or alternatively, to the determination of the open position based on the decrease of temperature, the determined decrease in temperature may also indicate that additional heating of the curing device is required. For example, in the open position (or irrespective of the position) the means for determining the temperature may determine that the temperature has dopped substantially and further heating is required. Alternatively, in step S110, the means for determining a state of the means for receiving the green tire 130 and the means for determining the temperature may determine whether the means for receiving the green tire 130 is in an open position or in a closed position and/or whether additional heating is required.

If it is determined that the means for receiving the green tire is in an open position, and/or it is determined that additional heating is required, the method continues with step S120. While the means for receiving the green tire 130 is in the open position, a cured tire may be removed from the means for receiving the green tire 130, and/or a green tire may be inserted into the means for receiving the green tire 130. In step S120, a second amount of steam is provided to the heat transfer region of the cone ring 110 and preferably, a fourth amount of steam is provided to the one or more heating plates 120. The second amount of steam is an additional steam pulse added to the first amount of steam. Preferably, the second amount of steam is at least 10%, preferably at least 15%, more preferably at least 20%, most preferably at least 25% larger than the first amount of steam and preferably the fourth amount of steam is at least 2%, preferably at least 3%, more preferably at least 4% and most preferably at least 5% larger than the third amount of steam. In this context, an amount being larger mans that the pressure of steam/volume of steam per time interval being provided to the system is larger. Preferably, the second amount of steam and optionally the fourth amount of steam are provided for a relatively short amount of time as compared to the provision of the first and third amount of steam. Preferably, the first and fourth amount of steam are provided as a steam pulse (a burst of steam).

The increased provision of steam to the heating arrangement 100 ensures that the temperature of the system is high, and that the temperature of the heating arrangement 100 does not drop during the insertion of a new green tire. Providing the heating arrangement 100 as discussed with respect to Figs. 1 to 5 enables that, during the relatively short burst of second/fourth amount of steam, the temperature of the heating arrangement 100 increases significantly, counteracting the temperature drop due to insertion of a new green tire.

During provision of the second (and optionally fourth) amount of steam in S120, the means for determining a state of the means for receiving the green tire 130 continues determination of the state of the means for receiving the green tire 130. In step S121, the means for determining a state of the means for receiving the green tire 130 determines that the means for determining the green tire 130 is in the closed position and/or that no additional heating is required. This is typically the state after a new green tire was inserted into the means for receiving the green tire 130.

After the determination of step S121, the heating arrangement 100 ceases provision of the second (and optionally fourth) amount of steam and continues providing the first amount of steam to the heat transfer region and optionally to the third amount of steam to the one or more heating plates 120 (S122).

Step S122 may be identical with the initial step S100. Accordingly, the cycle of the method shown in Fig. 7 may restart with step S100/S122.

If it was determined in step S110 by the means for determining a state of the means for receiving the green tire 130 that the means for receiving the green tire 130 is in the closed position and/or no additional heating is required, the provision of the first amount of steam to the heat transfer region 111 is continued S130 (and optionally the provision of the third amount of steam to the one or more heating plates 120).

While the first (and optionally third) amount of steam is provided, the means for determining a state of the means for receiving the green tire 130 continues determination of the state of the means for receiving the green tire 130.

In step S131, the means for determining a state of the means for receiving the green tire 130 determines that the means for determining the green tire 130 is now in the open position. This is typically the state in which a new green tire is being inserted into the means for receiving the green tire 130. The method now continues with step S120 as discussed above.

The present invention also relates to a computer-implemented method comprising instructions that when executed by a processor carry out the method discussed in the above.

### REFERENCE NUMERALS

- 100: heating arrangement;
- 110: cone ring;
- 111: heat transfer region;
- 112: heat exchange element;
- 113: protrusion elements;
- 114: outer side;
- 115: inner side;
- 120: heating plates;
- 130: means for receiving the green tire;
- 131: engagement portion;
- 132: tire;
- 133: cavity;
- 140: means for determining a state of the means for receiving the green tire;
- 150: bladder;
- 210: microgrooves;
- 211: longitudinal direction;
- 212: first circular-shaped microgroove;
- 213: center;
- 214: second circular-shaped microgroove;
- 215: center.

## Claims

1. A heating arrangement (100) for curing a tire, the heating arrangement comprising:
a cone ring (110) comprising:
a heat transfer region (111) comprising one or more heat exchange elements (112), the heat exchange elements having one or more protrusion elements (113) for increasing the surface area of the heat exchange elements (112).

2. The heating arrangement (100) according to the preceding claim, wherein the one or more protrusion elements (113) are heat transfer fins.

3. The heating arrangement (100) according to any one of the preceding claims, wherein the heat transfer region (111) comprises at least two heat exchange elements (112).

4. The heating arrangement (100) according to any one of the preceding claims, wherein the one or more heat exchange elements (112) have a substantially right-trapezoid shape, and/or
wherein the one or more heat exchange elements (112) comprise a copper material coating.

5. The heating arrangement (100) according to any one of the preceding claims, wherein the heat transfer region comprises a plurality of microgrooves configured to increase the surface area of the heat transfer region.

6. A curing device for curing a tire comprising:
means for receiving a green tire (130); and
the heating arrangement (100) according to any one of the preceding claims, wherein the cone ring (110) is arranged around the means for receiving the green tire (130) and preferably to engage mechanically with the means for receiving the green tire (130).

7. The curing device according to the preceding claim, wherein the cone ring (110) is configured to provide heat to the means for receiving the green tire (130).

8. The curing device according to claim 6 or 7 further comprising:
means for determining a state of the curing device 140, configured to determine that the means for receiving the green tire (130) is in an open position configured to allow insertion or removal of the green tire from the means for receiving the green tire (130) or in a closed position that does not allow insertion or removal of the green tire from the means for receiving the green tire (130).

9. The curing device according to any one of claims 6 to 8, further comprising, means for determining the temperature of at least a portion of the means for receiving the green tire (130), and/or of at least a portion of the cone ring (110).

10. The curing device according to any one of claims 6 to 9 comprising the heating arrangement according to claim 8, wherein the one or more heating platen (120) are arranged above and/or below the means for receiving the green tire (130), such that the heating arrangement (100) encapsulates the means for receiving the green tire (130).

11. A method for heating a curing device for tire manufacturing according to any one of claims 6 to 10, the method comprising:
determining that a means for receiving a green tire is in an open position configured to allow insertion of a green tire or removal of a cured tire from the means for receiving the green tire; and/or
determining that the curing device requires additional heating;
if it is determined that the means for receiving the green tire is in the closed position and/or that no additional heating is required, providing a first amount of steam to a heat transfer region of the cone ring,
if it is determined that the means for receiving the green tire is in the open position and/or that additional heating is required, providing a second amount of steam to the heat transfer region of the cone ring, the second amount of steam being substantially larger than the first amount of steam.

12. The method according to the preceding claim, wherein the second amount of steam is provided as a steam pulse.

13. The method according to the any one of claims 11 or 12, wherein the second amount of steam is provided for a predetermined duration.

14. The method according to any of claims 11 to 13, wherein the second amount of steam is provided for as long as it is determined that the means for receiving a green tire is in the open position and/or additional heating is required.

15. A computer-implemented method comprising instructions that when executed by a processor carry out the method according to any one of claims 11 to 14.
